(19) Europäisches Patentamt
European Patent Office
Office européen des brevets

(11) EP 4 149 889 B1

(12) **EUROPEAN PATENT SPECIFICATION**

(45) Date of publication and mention of the grant of the patent:
**22.05.2024 Bulletin 2024/21**

(21) Application number: **21722250.4**

(22) Date of filing: **04.05.2021**

(51) International Patent Classification (IPC):
***C01G 53/00*** *(2006.01)* ***H01M 4/525*** *(2010.01)*
***H01M 4/131*** *(2010.01)* ***H01M 4/1391*** *(2010.01)*
***H01M 4/36*** *(2006.01)* ***H01M 4/505*** *(2010.01)*
***H01M 4/62*** *(2006.01)*

(52) Cooperative Patent Classification (CPC):
**C01G 53/006; C01G 53/50; H01M 4/131; H01M 4/1391; H01M 4/362; H01M 4/505; H01M 4/525;** C01P 2002/52; C01P 2004/53; C01P 2004/61; C01P 2006/12; H01M 4/625; Y02E 60/10

(86) International application number:
**PCT/EP2021/061636**

(87) International publication number:
**WO 2021/228614 (18.11.2021 Gazette 2021/46)**

(54) **PROCESS FOR MAKING A PARTICULATE (OXY)HYDROXIDE, AND ELECTRODE ACTIVE MATERIAL MADE THEREFROM**

VERFAHREN ZUR HERSTELLUNG EINES TEILCHENFÖRMIGEN (OXY)HYDROXIDS UND DARAUS HERGESTELLTES ELEKTRODENAKTIVMATERIAL

PROCÉDÉ DE FABRICATION D’UN (OXY)HYDROXYDE PARTICULAIRE ET MATÉRIAU ACTIF D’ÉLECTRODE FABRIQUÉ À PARTIR DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.05.2020 EP 20174875**

(43) Date of publication of application:
**22.03.2023 Bulletin 2023/12**

(73) Proprietor: **BASF SE**
**67056 Ludwigshafen am Rhein (DE)**

(72) Inventors:
- **BERGNER, Benjamin Johannes Herbert**
  **67056 Ludwigshafen (DE)**
- **BERK, Rafael Benjamin**
  **67056 Ludwigshafen (DE)**

(74) Representative: **BASF IP Association**
**BASF SE**
**GBI-C006**
**67056 Ludwigshafen (DE)**

(56) References cited:
**WO-A1-2010/094394**
**KR-B1- 101 815 779**
**US-A1- 2011 240 913**
**US-A1- 2019 214 628**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

The present invention is directed towards a process for making a particulate (oxy)hydroxide of TM wherein TM comprises nickel wherein said process comprises the steps of:

(a) Providing an aqueous solution (α) or two differently composed solutions (α-b) and (α-d) each containing water-soluble salts of Ni and of at least one transition metal selected from Co and Mn, and, optionally, at least one further metal selected from Ti, Zr, Mo, W, Al, Mg, Nb, and Ta, and an aqueous solution (β) containing an alkali metal hydroxide and, optionally, an aqueous solution (γ) containing ammonia,

(b) combining a solution (α) - or solution (α-b) - and a solution (β) and, if applicable, a solution (γ) at a pH value in the range of from 12.1 to 13.0, thereby creating solid particles of hydroxide containing nickel,

(c) continuing combining solutions (α) - or (α-b) - and (β) and, if applicable, (γ) at a pH value in the range of from 9.0 to 12.1 and in any way below the pH value in step (b),

(d) adding a solution (α) - or solution (α-d) - and a solution (β) and, if applicable, a solution
(γ) at a pH value in the range of from 12.1 to 12.7 and in any way above the pH value in step (c),

(e) continuing combining such solutions (α) - or (α-d) - and (β) and, if applicable, (γ) at a pH value in the range of from 9.0 to 12.1 and in any way below the pH value in step (d),

wherein step (d) has a duration in the range of from rt-0.01 to rt 0.15 and wherein rt is the average residence time of the reactor in which steps (b) to (e) are carried out.

Furthermore, the present invention is directed to electrode active materials and their use.

Lithiated transition metal oxides are currently being used as electrode active materials for lithium-ion batteries. Extensive research and developmental work have been performed in the past years to improve properties like charge density, specific energy, but also other properties like the reduced cycle life and capacity loss that may adversely affect the lifetime or applicability of a lithium-ion battery. Additional effort has been made to improve manufacturing methods.

In a typical process for making cathode materials for lithium-ion batteries, first a so-called precursor is being formed by co-precipitating the transition metals as carbonates, oxides or preferably as hydroxides that may or may not be basic, for example oxyhydroxides. The precursor is then mixed with a source of lithium such as, but not limited to LiOH, $Li_2O$ or $Li_2CO_3$ and calcined (fired) at high temperatures. Lithium salt(s) can be employed as hydrate(s) or in dehydrated form. The calcination - or firing - often also referred to as thermal treatment or heat treatment of the precursor - is usually carried out at temperatures in the range of from 600 to 1,000 °C. During the thermal treatment a solid-state reaction takes place, and the electrode active material is formed. The thermal treatment is performed in the heating zone of an oven or kiln.

A typical class of cathode active materials delivering high energy density contains a high amount of Ni (Ni-rich), for example at least 80 mol-%, referring to the content of non-lithium metals. However, the energy density still needs improvement.

To a major extent, properties of the precursor translate into properties of the respective electrode active material to a certain extent, such as particle size distribution, content of the respective transition metals and more. It is therefore possible to influence the properties of electrode active materials by steering the properties of the precursor.

It was therefore an objective of the present invention to provide electrode active materials with high energy density and a simple process for manufacturing them.

It has been suggested to make blends from cathode active materials with different particle diameters, for example bimodal blends, see, e.g., US 2011/0240913.

In KR 101 815 779 B1, specific precursors with a trimodal particle size distribution are disclosed.

Accordingly, the process defined at the outset has been found, hereinafter also referred to as inventive process or process according to the present invention. The inventive process is a process for making a particulate (oxy)hydroxide of TM. Said particulate (oxy)hydroxide then serves as a precursor for electrode active materials, and it may therefore also be referred to as precursor.

In one embodiment of the present invention, the resultant (oxy)hydroxide of TM is in particulate form, and with a bimodal particle diameter distribution. The particles size distribution may be determined by light scattering or LASER diffraction or electroacoustic spectroscopy, LASER diffraction being preferred. One maximum in the particle diameter distribution is preferably in the range of from 2 to 6 μm and the other in the range of from 8 to 16 μm. In this context, particle diameters refer to the diameter of the secondary particles.

In one embodiment of the present invention, the particle shape of the secondary particles of the resultant

precursor is spheroidal, that are particles that have a spherical shape. Spherical spheroidal shall include not just those which are exactly spherical but also those particles in which the maximum and minimum diameter of at least 90% (number average) of a representative sample differ by not more than 10%.

In one embodiment of the present invention, the resultant precursor is comprised of secondary particles that are agglomerates of primary particles.

In one embodiment of the present invention the specific surface (BET) of the resultant precursor is in the range of from 2 to 10 $m^2/g$, determined by nitrogen adsorption, for example in accordance with to DIN-ISO 9277:2003-05.

The precursor is an (oxy)hydroxide of TM wherein TM comprises Ni and at least one transition metal selected from Co and Mn, and, optionally, at least one further metal selected from Ti, Zr, Mo, W, Al, Mg, Nb, and Ta.

In one embodiment of the present invention, TM is a combination of metals according to general formula (I)

$$(Ni_aCo_bMn_c)_{1-d}M_d \qquad (I)$$

with

a being in the range of from 0.6 to 0.95, preferably from 0.8 to 0.92,
b being in the range of from 0.025 to 0.2, preferably from 0.025 to 0.15,
c being in the range of from zero to 0.2, preferably from zero to 0.15,
and
d being in the range of from zero to 0.1, preferably from zero to 0.05,
M is selected from Al, Ti, Zr, Mo, W, Al, Mg, Nb, and Ta,

$$a + b + c = 1.$$

TM may contain traces of further metal ions, for example traces of ubiquitous metals such as sodium, calcium or zinc, as impurities but such traces will not be taken into account in the description of the present invention. Traces in this context will mean amounts of 0.05 mol-% or less, referring to the total metal content of TM.

The inventive process comprises the following steps (a) and (b) and (c) and (d) and (e), hereinafter also referred to as step (a) and step (b) and step (c) and step (d) and step (e), or briefly as (a) or (b) or (c) or (d) or (e), respectively. The inventive process will be described in more detail below.

Step (a) includes providing aqueous solution (α) or two differently composed solutions (α-b) and (α-d) each containing water-soluble salts of Ni and of at least one transition metal selected from Co and Mn, and, optionally, at least one further metal selected from Ti, Zr, Mo, W, Al, Mg, Nb, and Ta, and an aqueous solution (β) containing an alkali metal hydroxide and, optionally, an aqueous solution (γ) containing ammonia.

The term water-soluble salts of cobalt and nickel or manganese or of metals other than nickel and cobalt and manganese refers to salts that exhibit a solubility in distilled water at 25°C of 25 g/l or more, the amount of salt being determined under omission of crystal water and of water stemming from aquo complexes. Water-soluble salts of nickel and cobalt and manganese may preferably be the respective water-soluble salts of $Ni^{2+}$ and $Co^{2+}$ and $Mn^{2+}$. Examples of water-soluble salts of nickel and cobalt are the sulfates, the nitrates, the acetates and the halides, especially chlorides. Preferred are nitrates and sulfates, of which the sulfates are more preferred.

Said aqueous solution (α) - or the two differently composed solutions (α-b) and (α-d) - preferably contain Ni and further metal(s) in the relative concentration that is intended as TM of the precursor.

Solution(s) (α) - or solutions (α-b) and (a-d), respectively - may have a pH value in the range of from 2 to 5. In embodiments wherein higher pH values are desired, ammonia may be added to solution (α). However, it is preferred to not add ammonia to solution (α).

In one embodiment of the present invention, one solution (α) is provided.

In another embodiment of the present invention, at least two different solutions (α) are provided, for example solution (α-b) and solution (a-d), in with different relative amounts of water-soluble salts of metals are provided. In one embodiment of the present invention, solution (α-b) and solution (α-d) are provided wherein the relative amount of nickel is higher in solution (α-b) than in solution (αd), for example at the expense of Mn or Co.

In step (a), in addition an aqueous solution of alkali metal hydroxide is provided, hereinafter also referred to as solution (β). An example of alkali metal hydroxides is lithium hydroxide, preferred is potassium hydroxide and a combination of sodium and potassium hydroxide, and even more preferred is sodium hydroxide.

Solution (β) may contain some amount of carbonate, e.g., 0.1 to 2 % by weight, referring to the respective amount of alkali metal hydroxide, added deliberately or by aging of the solution or the respective alkali metal hydroxide.

Solution (β) may have a concentration of hydroxide in the range from 0.1 to 12 mol/l, preferably 6 to 10 mol/l.

The pH value of solution (β) is preferably 13 or higher, for example 14.5.

In the inventive process, it is preferred to use ammonia but to feed it separately as solution (γ) or in solution (β) but not in solution (α).

In one embodiment of the present invention, the following steps (b) to (e) are performed at temperatures in the range from 10 to 85°C, preferably at temperatures in the range from 40 to 60°C. Steps (b) to (e) may be performed at different temperatures or the same. It is preferred to perform steps (b) to (e) at the same temperature.

In one embodiment, rt is in the range of from 1 hour to 12 hours, preferably from 3 hours to 7 hours, wherein rt is the average reaction time of steps (b) to (e) or the average residence time of the reactor system in which steps (b) to (e) are carried out.

In the context of the inventive process, the pH value refers to the pH value of the respective solution or slurry at 23°C.

In one embodiment of the present invention, steps (b) to (e) are performed at the same pressure, for example at ambient pressure.

It is possible to perform steps (b) to (e) in a cascade of stirred tank reactors but it is preferred to steps (b) to (e) are performed in a continuous stirred tank reactor.

In step (b), a solution (α) - or solution (α-b) - and a solution (β) and, if applicable, a solution (γ) are combined at a pH value in the range of from 12.1 to 13.0, preferably from 12.1 to 12.5, thereby creating solid particles of hydroxide containing nickel and further metals as provided in solution (α) or (α-b), respectively.

In one embodiment of the present invention, step (b) has a duration in the range of from rt 0.01 to rt 0.40, preferably rt 0.02 to rt·0.15.

In step (c), combining solutions (α) - or (α-b) - and (β) and, if applicable, (γ) is continued but at a pH value in the range of from 9.0 to 12.1 and in any way below the pH value in step (b), preferably by at least 0.2. For example, if the pH value during step (b) is exactly 12.1, then the pH value in step (c) is selected to be in the range of from 9.0 to 11.9. The change in pH value may be effected, e.g., by decreasing the speed of addition of solution (β) or by increasing the speed of addition of solution (α) or (α-b), respectively, or by decreasing the amount of ammonia, or by a combination of at least two of the foregoing measures. It is possible as well to modify solution (β) by introducing a solution of alkali metal hydroxide with a lower concentration.

In step (c), only a low extent of particle formation is observed and a higher extent of particle growth.

In step (d), a solution (α) - or solution (α-d) - and a solution (β) and, if applicable, a solution (γ) are added at a pH value in the range of from 12.0 to 12.7, preferably from 12.2 to 12.5 and in any way above the pH value in step (c). For example, if step (c) is carried out at a pH value of 12.0, then step (d) is carried out at a pH value of higher than 12.0 up to 12.7, for example by at least 0.2 units of pH value.

In one embodiment of the present invention, step (d) has a duration in the range of from rt 0.01 to rt 0.15, preferably 0.03 to 0.10 and wherein rt is defined as above.

In one embodiment of the present invention, step (d) has a duration in the range of from 3 minutes to 45 minutes.

In step (d), formation of new seeds is observed.

The change in pH value may be effected, e.g., by increasing the speed of addition of solution (β) or by decreasing the speed of addition of solution (α), or by increasing the amount of ammonia, or by a combination of at least two of the foregoing measures. It is possible as well to modify solution (β) by introducing a solution of alkali metal hydroxide with a higher concentration.

In step (e), combining solutions (α) or (α-d), respectively, and (β) and, if applicable, (γ) is continued but at a pH value in the range of from 9.0 to 12.0 and in any way below the pH value in step (d), preferably by at least 0.2. The change in pH value may be effected, e.g., by decreasing the speed of addition of solution (β) or by increasing the speed of addition of solution (α), or by decreasing the amount of ammonia, or by a combination of at least two of the foregoing measures. It is possible as well to modify solution (β) by introducing a solution of alkali metal hydroxide with a lower concentration.

In step (e), only a low extent of particle formation is observed and a higher extent of particle growth.

In one embodiment of the present invention, solution (α-d) used in steps (d) and (e) have a different composition compared to the solution (α-b) used in steps (b) and (c), for example, the nickel content of solutions (α-d) is lower compared to the nickel content of solutions (α-b). Such solutions (α-d) are then distinguished from solutions (α-b) but are still covered by the general concept of solution (α) - namely, containing water-soluble salts of Ni and of at least one transition metal selected from Co and Mn, and, optionally, at least one further metal selected from Ti, Zr, Mo, W, Al, Mg, Nb, and Ta.

In other embodiments, solution (α) used in steps (d) and (e) have the same composition as solution (α) used in steps (b) and (c).

In one embodiment of the present invention, steps (b) to (e) are performed under inert gas, for example a noble gas such as argon, or under $N_2$.

In one embodiment of the present invention, in total a slight excess of hydroxide is applied, for example 0.1 to

10 mole-%, referring to TM.

In one embodiment of the present invention, during at least one of steps (b) to (e), mother liquor is withdrawn from the slurry, for example by way of a clarifier. In other embodiments, no mother liquor is removed.

After step (e), further steps may be performed such as isolating the solids from the slurry formed by solid-liquid-separation methods, for example decantation, filtration, or by the means of a centrifuge, filtration being preferred, to obtain such precursor. In preferred embodiments, the precursor is dried, for example under air at a temperature in the range of from 100 to 140°C. In the course of the drying, some oxidation may be observed.

By the inventive process, a precursor useful for the manufacture of an electrode active material is obtained. The precursor has a bimodal particle diameter distribution, and electrode active with high pressed density may be obtained, for example 3.0 to 3.6 g/cm$^3$ at a pressure of 250 MPa.

Another aspect of the present invention relates to precursors for the manufacture of electrode active materials, hereinafter also defined as inventive precursors or precursors according to the present invention or as inventive (oxy)hydroxides. They are advantageously made according to the inventive process. Inventive precursors are described in more detail below.

Inventive precursors are particulate (oxy)hydroxides of TM wherein TM is a combination of Ni and at least one transition metal selected from Co and Mn, and, optionally, at least one further metal selected from Ti, Zr, Mo, W, Al, Mg, Nb, and Ta, wherein said oxyhydroxide has a bimodal particle diameter distribution with a relative maximum at 2 to 6 μm and with a relative maximum at 8 to 16 μm, and wherein the particles of the smaller particle fraction have a relative nickel content that is lower compared to the relative nickel content of the bigger particle fraction, and wherein the particle diameter refers to the diameter of the secondary particles.

In another embodiment of the present invention, the particles of the smaller particle fraction and the particles of the bigger particle fraction have the same composition.

The particles of the bigger particle fraction - namely, with the maximum off from 8 to 16 μm - have a gradient in nickel concentration and wherein the relative nickel content at the outer surface of the secondary particles is lower than in the center. The gradient may, e.g., be determined by Scanning Electron Microscopy ("SEM") of cross-sectioned particles combined with Energy Dispersive X-ray Spectroscopy ("EDX") along the particle diameter. Cross sections may be obtained by ion polishing particles embedded in a resin.

In one embodiment of the present invention, the particles of the smaller particle fraction - namely, with the maximum off from 2 to 6 μm - do not have a gradient in nickel concentration. A deviation of ±1 mol-% or less shall not be deemed a gradient but experimental error.

(Oxy)hydroxides do not only refer to materials with stoichiometrically identical amounts of oxide and hydroxide anions but with any stoichiometry between stoichiometric oxides and stoichiometric hydroxides.

In one embodiment of the present invention, TM is a combination of metals according to general formula (I)

$$(Ni_aCo_bMn_c)_{1-d}M_d \qquad (I)$$

with

a being in the range of from 0.6 to 0.95, preferably from 0.8 to 0.92,
b being in the range of from 0.025 to 0.2, preferably from 0.025 to 0.15,
c being in the range of from zero to 0.2, preferably from zero to 0.15,
and
d being in the range of from zero to 0.1, preferably from zero to 0.05
M is selected from Mg, Al, Ti, Zr, Mo, W, Al, Mg, Nb, and Ta,

$$a + b + c = 1.$$

In one embodiment of the present invention, the amount of particles of the smaller particle fraction is in the range of from 10 to 30% of the respective precursor and the amount of particles of bigger particle fraction are in the range of from 70 to 90%, in each case referring to the numbers. The particle size distribution is preferably analyzed by dynamic light scattering ("DLS").

In one embodiment of the present invention, the resultant precursor contains one or more impurities such as residual sulphate in case such precursor has been made by co-precipitation from a solution of one or more sulphates of TM. The sulphate content may be in the range of from 0.01 to 0.4% by weight, referring to total precursor.

Inventive precursor is comprised of secondary particles that are agglomerates of primary particles.

Another aspect of the present invention is directed towards the use of inventive precursors and of precursors

made according to the present invention for the manufacture of electrode active materials, and to a process for making electrode active materials. Electrode active materials may be advantageously made by mixing a precursor made according to the inventive process with a source of lithium and, optionally, with another compound, for example a dopant, and to then thermally treat the resultant mixture. The mixing step may hereinafter also be referred to as step (f) or briefly as (f), and the thermal treatment step as step (g) or briefly as (g).

In one embodiment of the present invention, TM in precursor made according to the present invention and TM in electrode active materials have the same constitution.

In another embodiment of the present invention, TM in precursor made according to the present invention is the same as TM in electrode active materials but without M according to formula (I).

Examples of sources of lithium are $Li_2O$, LiOH, and $Li_2CO_3$, each water-free or as hydrate, if applicable, for example $LiOH \cdot H_2O$. Preferred example is lithium hydroxide.

Source of lithium is preferable in particulate form, for example with an average diameter (D50) in the range of from 3 to 10 $\mu$m, preferably from 5 to 9 $\mu$m.

Oxide or (oxy)hydroxide of M may serve as source of dopant. Such dopant is selected from oxides, hydroxides and oxyhydroxides of Mg, Ti, Zr, Mo, W, Co, Mn, Nb, and Ta and especially of Al. Lithium titanate is also a possible source of titanium. Examples of dopants are $TiO_2$ selected from rutile and anatase, anatase being preferred, furthermore $TiO_2 \cdot aq$, basic titania such as $TiO(OH)_2$, furthermore $Li_4Ti_5O_{12}$, $ZrO_2$, $Zr(OH)_4$, $ZrO_2 \cdot aq$, $Li_2ZrO_3$, basic zirconia such as $ZrO(OH)_2$, furthermore $MoO_2$, MoOs, MgO, $Mg(OH)_2$, $Mg(NO_3)_2$, $Ta_2O_5$, $Nb_2O_5$, $Nb_2O_3$, furthermore $WO_3$, $Li_2WO_4$, $Al(OH)_3$, $Al_2O_3$, $Al_2O_3 \cdot aq$, and AlOOH. Preferred are Al compounds such as $Al(OH)_3$, $\alpha$-$Al_2O_3$, $\gamma$-$Al_2O_3$, $Al_2O_3 \cdot aq$, and AlOOH, Ti compounds and Zr compounds.

In one embodiment of the present invention such dopant may have a specific surface area (BET) In the range of from 1 to 200 $m^2/g$, preferably 50 to 150 $m^2/g$. The specific surface are (BET) may be determined by nitrogen adsorption, for example according to DIN-ISO 9277:2003-05.

In one embodiment of the present invention, such dopant is nanocrystalline. Preferably, the average crystallite diameter of the dopant is 100 nm at most, preferably 50 nm at most and even more preferably 15 nm at most. The minimum diameter may be 4 nm.

In one embodiment of the present invention, such dopant(s) is/are a particulate material with an average diameter (D50) in the range of from 1 to 10 $\mu$m, preferably 2 to 4 $\mu$m. The dopant(s) is/are usually in the form of agglomerates. Its particle diameter refers to the diameter of said agglomerates.

In one embodiment of the present invention said an oxide or hydroxide of Al may have a specific surface (BET) In the range of from 1 to 200 $m^2/g$, preferably 50 to 150 $m^2/g$. The surface BET may be determined by nitrogen adsorption, for example according to DIN-ISO 9277:2003-05.

In one embodiment of the present invention, said oxide or hydroxide of aluminum is nanocrystalline. Preferably, the average crystallite diameter of said oxide or hydroxide of aluminum is 100 nm at most, preferably 50 nm at most and even more preferably 15 nm at most. The minimum diameter may be 4 nm.

In one embodiment of the present invention, said oxide or hydroxide of aluminum is a particulate material with an average diameter (D50) in the range of from 1 to 10 $\mu$m, preferably 2 to 4 $\mu$m. Said oxide or hydroxide of aluminum is usually in the form of agglomerates. Its particle diameter refers to the diameter of said agglomerates.

In a preferred embodiment, said oxide or hydroxide of aluminum is added in an amount of 2 to 10 mole % (referred to TM), preferably 0.1 up to 0.5 mole %.

Examples of suitable apparatuses for performing step (f) are high-shear mixers, tumbler mixers, plough-share mixers and free fall mixers. On laboratory scale, mortars with pestles are feasible as well.

In one embodiment of the present invention, step (f) is performed at a temperature in the range of from ambient temperature to 200°C, preferably 20 to 50°C.

In one embodiment of the present invention, step (f) has a duration of 10 minutes to 2 hours. Depending on whether additional mixing is performed in step (g) or not, thorough mixing has to be accomplished in step (f).

Mixing of precursor, source of lithium compound and oxide or hydroxide of aluminum may be performed all in one or in sub-steps, for example by first mixing source of lithium compound and said oxide or hydroxide of aluminum and then combining such mixture with the precursor, or by first mixing precursor and source of lithium and then adding said oxide or hydroxide of aluminum, or by first mixing said oxide or hydroxide of aluminum and precursor and then adding source of lithium. It is preferred to first mix precursor and source of lithium compound and to then add said oxide or hydroxide of aluminum.

Although it is possible to add an organic solvent, for example glycerol or glycol, or water in step (f) it is preferred to perform step (f) in the dry state, that is without addition of water or of an organic solvent.

A mixture is obtained.

Step (g) includes subjecting said mixture to heat treatment at a temperature in the range of from 650 to 1000°C, preferably 650 to 850°C.

In one embodiment of the present invention, the mixture of precursor and source of lithium and compound of

Al and, optionally, solvent(s), is heated to 700 to 1000 °C with a heating rate of 0.1 to 10 °C/min.

In one embodiment of the present invention, the temperature is ramped up before reaching the desired temperature of from 700 to 1000°C, preferably 750 to 900°C. For example, first the mixture of precursor and source of lithium and oxide or hydroxide of Al is heated to a temperature to 350 to 550°C and then held constant for a time of 10 min to 4 hours, and then it is raised to 650°C up to 1000°C, preferably 650 to 850°C.

In embodiments wherein in step (f) at least one solvent has been used, as part of step (g), or separately and before commencing step (g), such solvent(s) are removed, for example by filtration, evaporation or distilling of such solvent(s). Preferred are evaporation and distillation.

In one embodiment of the present invention, step (g) is performed in a roller hearth kiln, a pusher kiln or a rotary kiln or a combination of at least two of the foregoing. Rotary kilns have the advantage of a very good homogenization of the material made therein. In roller hearth kilns and in pusher kilns, different reaction conditions with respect to different steps may be set quite easily. In lab scale trials, box-type and tubular furnaces and split tube furnaces are feasible as well.

In one embodiment of the present invention, step (g) is performed in an oxygen-containing atmosphere, for example in a nitrogen-air mixture, in a rare gas-oxygen mixture, in air, in oxygen or in oxygen-enriched air. In a preferred embodiment, the atmosphere in step (g) is selected from air, oxygen and oxygen-enriched air. Oxygen-enriched air may be, for example, a 50:50 by volume mix of air and oxygen. Other options are 1:2 by volume mixtures of air and oxygen, 1:3 by volume mixtures of air and oxygen, 2:1 by volume mixtures of air and oxygen, and 3:1 by volume mixtures of air and oxygen.

In one embodiment of the present invention, step (g) of the present invention is performed under a forced flow of gas, for example air, oxygen and oxygen-enriched air. Such stream of gas may be termed a forced gas flow. Such stream of gas may have a specific flow rate in the range of from 0.5 to 15 $m^3/h \cdot kg$ material according to general formula $Li_{1+x}TM_{1-x}O_2$. The volume is determined under normal conditions: 298 Kelvin and 1 atmosphere. Said forced flow of gas is useful for removal of gaseous cleavage products such as water and carbon dioxide.

In one embodiment of the present invention, step (g) has a duration in the range of from one hour to 30 hours. Preferred are 10 to 24 hours. The cooling time is neglected in this context.

After thermal treatment in accordance to step (g), the electrode active material so obtained is cooled down before further processing. Additional - optional steps before further processing the resultant electrode active materials are sieving and de-agglomeration steps.

By performing the inventive process electrode active materials with excellent properties are available through a straightforward process. Preferably, the electrode active materials so obtained have a specific surface (BET) in the range of from 0.1 to 0.8 $m^2/g$, determined according to DIN-ISO 9277:2003-05.

Another aspect of the present invention is related to electrode active materials, hereinafter referred to as inventive electrode active materials or inventive cathode active materials.

Inventive electrode active material follows the general formula $Li_{1+x}TM_{1-x}O_2$ wherein x is in the range of from -0.03 to +0.1 and TM is a combination of Ni and at least one transition metal selected from Co and Mn, and, optionally, at least one further metal selected from Ti, Zr, Mo, W, Al, Mg, Nb, and Ta, wherein said electrode active material has a bimodal particle diameter distribution with a relative maximum at 2 to 6 μm and with a relative maximum at 8 to 16 μm, and wherein the particles of the smaller particle fraction have a relative nickel content that is lower compared to the relative nickel content of the bigger particle fraction, and wherein the particle diameter refers to the diameter of the secondary particles, and wherein the particles of the bigger particle fraction have a gradient in nickel concentration and wherein the relative nickel content at the outer surface of the secondary particles is lower than in the center. The terms "bigger particle fraction" and "smaller particle fraction" are defined as above.

In one embodiment of the present invention, TM is a combination of metals according to general formula (I)

$$(Ni_aCo_bMn_c)_{1-d}M_d \qquad (I)$$

with

a being in the range of from 0.6 to 0.95, preferably from 0.8 to 0.92,
b being in the range of from 0.025 to 0.2, preferably from 0.025 to 0.15,
c being in the range of from zero to 0.2, preferably from zero to 0.15,
and
d being in the range of from zero to 0.1, preferably from zero to 0.05
M is selected from Mg, Al, Ti, Zr, Mo, W, Al, Mg, Nb, and Ta,

$$a + b + c = 1.$$

In one embodiment of the present invention, the amount of particles of the smaller particle fraction is in the range of from 10 to 30% of the respective precursor and the amount of particles of bigger particle fraction are in the range of from 70 to 90%, in each case referring to the numbers. The particle size distribution is preferably analyzed by LASER spectroscopy.

In one embodiment of the present invention, inventive electrode active materials have a specific surface (BET) in the range of from 0.1 to 1.5 $m^2/g$. The BET surface may be determined by nitrogen adsorption after outgassing of the sample at 200°C for 30 minutes and, beyond this, according to DIN-ISO 9277:2003-05.

In one embodiment of the present invention, the primary particles in the outer part of the secondary particles are essentially oriented radially.

The primary particles may be needle-shaped or platelets or a mixture of both. The term "radially oriented" then refers to the length in case of needle-shaped or length or breadth in case of platelets being oriented in the direction of the radius of the respective secondary particle.

In case of radially oriented primary particles, long and thin primary particles are preferred, that means with an aspect ratio in the range of from 3.5 to 5. In this case, the aspect ratio is defined by height along the radial direction/width perpendicular to that.

The portion of radially oriented primary particles may be determined, e.g., by SEM (Scanning Electron Microscopy) of a cross-section of at least 5 secondary particles.

"Essentially radially oriented" does not require a perfect radial orientation but includes that in an SEM analysis, a deviation to a perfectly radial orientation is at most 5 degrees.

Furthermore, at least 60% of the secondary particle volume is filled with radially oriented primary particles. Preferably, only a minor inner part, for example at most 40%, preferably at most 20%, of the volume of those particles is filled with non-radially oriented primary particles, for example, in random orientation.

In one embodiment of the present invention, the very inner parts of the secondary particles of inventive electrode active material are compact. In this context, the very inner part is meant to be the inner sphere having a diameter of 2 to 4 $\mu$m of each secondary particle. That means, in the context of the present invention, that in SEM pictures, no pores or holes may be detected in the very inner part or core of such particles.

A further aspect of the present invention refers to electrodes and specifically to cathodes, hereinafter also referred to as inventive cathodes. Inventive cathodes comprise

(A) at least one inventive electrode active material,
(B) carbon in electrically conductive form,
(C) at least one binder.

In a preferred embodiment of the present invention, inventive cathodes contain

(A) 80 to 99 % by weight inventive electrode active material,
(B) 0.5 to 19.5 % by weight of carbon,
(C) 0.5 to 9.5 % by weight of binder polymer,

percentages referring to the sum of (A), (B) and (C).

Cathodes according to the present invention contain carbon in electrically conductive modification, in brief also referred to as carbon (B). Carbon (B) can be selected from soot, active carbon, carbon nanotubes, graphene, and graphite. Carbon (B) can be added as such during preparation of electrode materials according to the invention.

Electrodes according to the present invention can comprise further components. They can comprise a current collector (D), such as, but not limited to, an aluminum foil. They further comprise a binder polymer (C), hereinafter also referred to as binder (C). Current collector (D) is not further described here.

Suitable binders (C) are preferably selected from organic (co)polymers. Suitable (co)polymers, i.e. homopolymers or copolymers, can be selected, for example, from (co)polymers obtainable by anionic, catalytic or free-radical (co)polymerization, especially from polyethylene, polyacrylonitrile, polybutadiene, polystyrene, and copolymers of at least two comonomers selected from ethylene, propylene, styrene, (meth)acrylonitrile and 1,3-butadiene. Polypropylene is also suitable. Polyisoprene and polyacrylates are additionally suitable. Particular preference is given to polyacrylonitrile.

In the context of the present invention, polyacrylonitrile is understood to mean not only polyacrylonitrile homopolymers but also copolymers of acrylonitrile with 1,3-butadiene or styrene. Preference is given to polyacrylonitrile homopolymers.

In the context of the present invention, polyethylene is not only understood to mean homopoly-ethylene, but also copolymers of ethylene which comprise at least 50 mol% of copolymerized ethylene and up to 50 mol% of at least one further comonomer, for example $\alpha$-olefins such as propylene, butylene (1-butene), 1-hexene, 1-octene, 1-decene, 1-dodecene, 1-pentene, and also isobutene, vinylaromatics, for example styrene, and also (meth)acrylic acid, vinyl

acetate, vinyl propionate, $C_1$-$C_{10}$-alkyl esters of (meth)acrylic acid, especially methyl acrylate, methyl methacrylate, ethyl acrylate, ethyl methacrylate, n-butyl acrylate, 2-ethylhexyl acrylate, n-butyl methacrylate, 2-ethylhexyl methacrylate, and also maleic acid, maleic anhydride and itaconic anhydride. Polyethylene may be HDPE or LDPE.

In the context of the present invention, polypropylene is not only understood to mean homopolypropylene, but also copolymers of propylene which comprise at least 50 mol% of copolymerized propylene and up to 50 mol% of at least one further comonomer, for example ethylene and $\alpha$-olefins such as butylene, 1-hexene, 1-octene, 1-decene, 1-dodecene and 1-pentene. Polypropylene is preferably isotactic or essentially isotactic polypropylene.

In the context of the present invention, polystyrene is not only understood to mean homopolymers of styrene, but also copolymers with acrylonitrile, 1,3-butadiene, (meth)acrylic acid, $C_1$-$C_{10}$-alkyl esters of (meth)acrylic acid, divinylbenzene, especially 1,3-divinylbenzene, 1,2-diphenylethylene and $\alpha$-methylstyrene.

Another preferred binder (C) is polybutadiene.

Other suitable binders (C) are selected from polyethylene oxide (PEO), cellulose, carboxymethylcellulose, polyimides and polyvinyl alcohol.

In one embodiment of the present invention, binder (C) is selected from those (co)polymers which have an average molecular weight $M_w$ in the range from 50,000 to 1,000,000 g/mol, preferably to 500,000 g/mol.

Binder (C) may be cross-linked or non-cross-linked (co)polymers.

In a particularly preferred embodiment of the present invention, binder (C) is selected from halogenated (co)polymers, especially from fluorinated (co)polymers. Halogenated or fluorinated (co)polymers are understood to mean those (co)polymers which comprise at least one (co)polymerized (co)monomer which has at least one halogen atom or at least one fluorine atom per molecule, more preferably at least two halogen atoms or at least two fluorine atoms per molecule. Examples are polyvinyl chloride, polyvinylidene chloride, polytetrafluoroethylene, polyvinylidene fluoride (PVdF), tetrafluoroethylene-hexafluoropropylene copolymers, vinylidene fluoride-hexafluoropropylene copolymers (PVdF-HFP), vinylidene fluoride-tetrafluoroethylene copolymers, perfluoroalkyl vinyl ether copolymers, ethylene-tetrafluoroethylene copolymers, vinylidene fluoride-chlorotrifluoroethylene copolymers and ethylene-chlorofluoroethylene copolymers.

Suitable binders (C) are especially polyvinyl alcohol and halogenated (co)polymers, for example polyvinyl chloride or polyvinylidene chloride, especially fluorinated (co)polymers such as polyvinyl fluoride and especially polyvinylidene fluoride and polytetrafluoroethylene.

A further aspect of the present invention is an electrochemical cell, containing

(A) a cathode comprising inventive electrode active material (A), carbon (B), and binder (C),
(B) an anode, and
(C) at least one electrolyte.

Embodiments of cathode (1) have been described above in detail.

Anode (2) may contain at least one anode active material, such as carbon (graphite), $TiO_2$, lithium titanium oxide, silicon or tin. Anode (2) may additionally contain a current collector, for example a metal foil such as a copper foil.

Electrolyte (3) may comprise at least one non-aqueous solvent, at least one electrolyte salt and, optionally, additives.

Non-aqueous solvents for electrolyte (3) can be liquid or solid at room temperature and is preferably selected from among polymers, cyclic or acyclic ethers, cyclic and acyclic acetals and cyclic or acyclic organic carbonates.

Examples of suitable polymers are, in particular, polyalkylene glycols, preferably poly-$C_1$-$C_4$-alkylene glycols and in particular polyethylene glycols. Polyethylene glycols can here comprise up to 20 mol% of one or more $C_1$-$C_4$-alkylene glycols. Polyalkylene glycols are preferably polyalkylene glycols having two methyl or ethyl end caps.

The molecular weight $M_w$ of suitable polyalkylene glycols and in particular suitable polyethylene glycols can be at least 400 g/mol.

The molecular weight $M_w$ of suitable polyalkylene glycols and in particular suitable polyethylene glycols can be up to 5,000,000 g/mol, preferably up to 2,000,000 g/mol.

Examples of suitable acyclic ethers are, for example, diisopropyl ether, di-n-butyl ether, 1,2-dimethoxyethane, 1,2-diethoxyethane, with preference being given to 1,2-dimethoxyethane.

Examples of suitable cyclic ethers are tetrahydrofuran and 1,4-dioxane.

Examples of suitable acyclic acetals are, for example, dimethoxymethane, diethoxymethane, 1,1-dimethoxyethane and 1,1-diethoxyethane.

Examples of suitable cyclic acetals are 1,3-dioxane and, in particular, 1,3-dioxolane.

Examples of suitable acyclic organic carbonates are dimethyl carbonate, ethyl methyl carbonate and diethyl carbonate.

Examples of suitable cyclic organic carbonates are compounds of the general formulae (II) and (III)

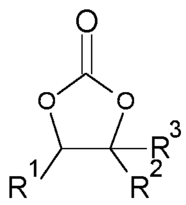

(II)

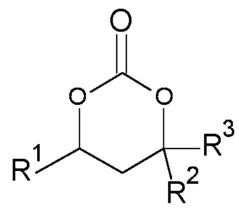

(III)

where $R^1$, $R^2$ and $R^3$ can be identical or different and are selected from among hydrogen and $C_1$-$C_4$-alkyl, for example methyl, ethyl, n-propyl, isopropyl, n-butyl, isobutyl, sec-butyl and tert-butyl, with $R^2$ and $R^3$ preferably not both being tert-butyl.

In particularly preferred embodiments, $R^1$ is methyl and $R^2$ and $R^3$ are each hydrogen, or $R^1$, $R^2$ and $R^3$ are each hydrogen.

Another preferred cyclic organic carbonate is vinylene carbonate, formula (IV).

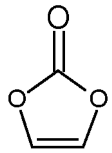

(IV)

The solvent or solvents is/are preferably used in the water-free state, i.e. with a water content in the range from 1 ppm to 0.1% by weight, which can be determined, for example, by Karl-Fischer titration.

Electrolyte (3) further comprises at least one electrolyte salt. Suitable electrolyte salts are, in particular, lithium salts. Examples of suitable lithium salts are $LiPF_6$, $LiBF_4$, $LiClO_4$, $LiAsF_6$, $LiCF_3SO_3$, $LiC(C_nF_{2n+1}SO_2)_3$, lithium imides such as $LiN(C_nF_{2n+1}SO_2)_2$, where n is an integer in the range from 1 to 20, $LiN(SO_2F)_2$, $Li_2SiF_6$, $LiSbF_6$, $LiAlCl_4$ and salts of the general formula $(C_nF_{2n+1}SO_2)_tYLi$, where m is defined as follows:

t = 1, when Y is selected from among oxygen and sulfur,
t = 2, when Y is selected from among nitrogen and phosphorus, and
t = 3, when Y is selected from among carbon and silicon.

Preferred electrolyte salts are selected from among $LiC(CF_3SO_2)_3$, $LiN(CF_3SO_2)_2$, $LiPF_6$, $LiBF_4$, $LiClO_4$, with particular preference being given to $LiPF_6$ and $LiN(CF_3SO_2)_2$.

In a preferred embodiment of the present invention, electrolyte (3) contains at least one flame retardant. Useful flame retardants may be selected from trialkyl phosphates, said alkyl being different or identical, triaryl phosphates, alkyl dialkyl phosphonates, and halogenated trialkyl phosphates. Preferred are tri-$C_1$-$C_4$-alkyl phosphates, said $C_1$-$C_4$-alkyls being different or identical, tribenzyl phosphate, triphenyl phosphate, $C_1$-$C_4$-alkyl di- $C_1$-$C_4$-alkyl phosphonates, and fluorinated tri-$C_1$-$C_4$-alkyl phosphates,

In a preferred embodiment, electrolyte (3) comprises at least one flame retardant selected from trimethyl phosphate, $CH_3$-P(O)$(OCH_3)_2$, triphenylphosphate, and tris-(2,2,2-trifluoroethyl)-phosphate.

Electrolyte (3) may contain 1 to 10% by weight of flame retardant, based on the total amount of electrolyte.

In an embodiment of the present invention, batteries according to the invention comprise one or more separators (4) by means of which the electrodes are mechanically separated. Suitable separators (4) are polymer films, in particular porous polymer films, which are unreactive toward metallic lithium. Particularly suitable materials for separators (4) are polyolefins, in particular film-forming porous polyethylene and film-forming porous polypropylene.

Separators (4) composed of polyolefin, in particular polyethylene or polypropylene, can have a porosity in the range from 35 to 50%. Suitable pore diameters are, for example, in the range from 30 to 500 nm.

In another embodiment of the present invention, separators (4) can be selected from among PET nonwovens filled with inorganic particles. Such separators can have a porosity in the range from 40 to 55%. Suitable pore diameters are, for example, in the range from 80 to 750 nm.

Batteries according to the invention can further comprise a housing which can have any shape, for example cuboidal or the shape of a cylindrical disk. In one variant, a metal foil configured as a pouch is used as housing.

Batteries according to the invention provide a very good discharge and cycling behavior, in particular at high

temperatures (45 °C or higher, for example up to 60°C) in particular with respect to the capacity loss.

Batteries according to the invention can comprise two or more electrochemical cells that combined with one another, for example can be connected in series or connected in parallel. Connection in series is preferred. In batteries according to the present invention, at least one of the electrochemical cells contains at least one electrode according to the invention. Preferably, in electrochemical cells according to the present invention, the majority of the electrochemical cells contain an electrode according to the present invention. Even more preferably, in batteries according to the present invention all the electrochemical cells contain electrodes according to the present invention.

The present invention further provides for the use of batteries according to the invention in appliances, in particular in mobile appliances. Examples of mobile appliances are vehicles, for example automobiles, bicycles, aircraft or water vehicles such as boats or ships. Other examples of mobile appliances are those which move manually, for example computers, especially laptops, telephones or electric hand tools, for example in the building sector, especially drills, battery-powered screwdrivers or battery-powered staplers.

The present invention is further illustrated by working examples.

Percentages of solution refer to % by weight unless expressly mentioned otherwise.

All pH values were measured outside the stirred tank reactor at 23°C.

All experiments are performed in a continuously stirred tank reactor, volume 3.2 liter, with clarifier system at the top of the stirred tank reactor and with a stirrer with two crossed blades.

I. Manufacture of precursors

The following aqueous solutions were made:

($\alpha$.1): aqueous solution of $NiSO_4$, $CoSO_4$ and $MnSO_4$, molar ratio Ni:Co:Mn = 87.0 : 5.0 : 8.0, overall transition metal concentration: 1.65 mol/kg.
($\alpha$.2): aqueous solution of $NiSO_4$, $CoSO_4$ and $MnSO_4$, molar ratio Ni:Co:Mn = 90.0 : 3.8 : 6.0, overall transition metal concentration: 1.65 mol/kg
($\alpha$.3): aqueous solution of $NiSO_4$, $CoSO_4$ and $MnSO_4$, molar ratio Ni:Co:Mn = 77.0 : 9.0 : 14.0, overall transition metal concentration: 1.65 mol/kg
($\beta$.1): aqueous 25 wt.% NaOH solution
($\gamma$.1): 25% ammonia ($NH_3$) solution

I.1 Procedure for manufacturing the comparative precursor C-pCAM.1

The stirred tank reactor is charged with de-ionized water containing 0.2 mol/l ammonium sulfate and heated to 55°C under nitrogen atmosphere. Subsequently, solution ($\beta$.1) is added in a way that the pH value is set to 12.25. At 55 °C, step (b.1) is commenced by adding solutions ($\alpha$.1), ($\beta$.1) and ($\gamma$.1) in a way that the pH value of the mother liquor is 12.25, and the molar ratio of $NH_3$ to sum of Ni, Co and Mn is 0.20. The formation of a slurry is observed.

In step (c.1), solutions ($\alpha$.1), ($\beta$.1) and ($\gamma$.1) are added in a way that the pH value is 12.05, and the molar ratio of $NH_3$ to TM (sum of Ni, Co and Mn) is 0.55.

Mother liquor is separated from the slurried particles in a separate vessel attached to the top of the stirred tank reactor and then continuously withdrawn from the vessel by a pump, said vessel serving as the clarifier. The individual flow rates of the solutions, further referred to as $f_i$ with i referring to the number of the corresponding solution, were adjusted to meet a certain residence time rt = $V/(f_\alpha+f_\beta+f_\gamma)$ and a certain molar ratio in the reactor $r(NH_3/Me) = c(NH_3)_{reactor}/[c(Ni)_{reactor} + c(Co)_{reactor} + C(Mn)_{reactor}]$ in the respective individual steps. Further details are summarized in Table 1.

After step (c.1), the solids are removed from the slurry by filtration, washed with water and dried under air at 120°C. Comparative precursor C-P-CAM.1 is obtained.

Table 1: Process data for the manufacture of C-P-CAM.1

| Step | rt [h] | run time [h] | Factor of rt | pH value | Molar ratio ($NH_3$/Ni+Co+Mn) |
|---|---|---|---|---|---|
| (b.1) | 7.5 | 2.5 | 0.33 | 12.25 | 0.20 |
| (c.1) | 5 | 40 | 8 | 12.05 | 0.55 |

I.2 Manufacture of comparative precursor pCAM.2

The stirred tank reactor is charged with de-ionized water containing 0.2 mol/l ammonium sulfate and heated

to 55°C under nitrogen atmosphere. Subsequently, solution (β.1) is added in a way that the pH value is set to 12.25.

At 55 °C, step (b.2) is commenced by adding solutions (α.1), (β.1) and (γ.1) in a way that the pH value of the mother liquor is 12.25, and the molar ratio of $NH_3$ to sum of Ni, Co and Mn is 0.20. The formation of a slurry is observed.

Mother liquor is separated from the slurried particles in a separate vessel attached to the top of the stirred tank reactor and then continuously withdrawn from the vessel by a pump, said vessel serving as the clarifier. The individual flow rates of the solutions, further referred to as $f_i$ with i referring to the number of the corresponding solution, were adjusted to meet a certain residence time $rt = V/(f_\alpha+f_\beta+f_\gamma)$ and a certain molar ratio in the reactor
$r(NH_3/Me) = c(NH_3)_{reactor}/[c(Ni)_{reactor} + c(Co)_{reactor} + c(Mn)_{reactor}]$ in the respective individual steps. Further details are summarized in Table 2.

In step (c.2), solutions (α.1), (β.1) and (γ.1) are added in a way that the pH value is 12.05, and the molar ratio of $NH_3$ to the sum of Ni, Co and Mn is 0.55.

In step (d.2), solutions (α.1), (β.1) and (γ.1) are added in a way that the pH value is 12.25, and the molar ratio of $NH_3$ to TM (sum of Ni, Co and Mn) is 0.20 and the formation of a new fraction of small particles is observed by DLS.

In step (e.2), solutions (α.1), (β.1) and (γ.1) are added in a way that the pH value is 12.00, and the molar ratio of $NH_3$ to the sum of Ni, Co and Mn is 0.55.

After step (e.2), the solids are removed from the slurry by filtration, washed with water and dried under air at 120°C. Inventive precursor P-CAM.2 is obtained.

Table 2: Process parameters for the manufacture of P-CAM.2

| Step | rt [h] | run time [h] | Factor of rt | pH value | $r(NH_3/Me)$ |
|---|---|---|---|---|---|
| (b.2) | 7.5 | 2 | 0.27 | 12.25 | 0.2 |
| (c.2) | 5 | 35 | 7 | 12.05 | 0.55 |
| (d.2) | 7.5 | 1.25 | 0.17 | 12.25 | 0.2 |
| (e.2) | 5 | 9 | 1.8 | 12.00 | 0.55 |

I.3 Manufacture of inventive precursor P-CAM.3

The protocol of I.2 is essentially followed but the below process parameters correspond to Table 3. Inventive precursor P-CAM.3 is obtained.

Table 3: Process parameters for the manufacture of P-CAM.3

| Step | rt [h] | run time [h] | Factor of rt | pH value | $r(NH_3/Me)$ |
|---|---|---|---|---|---|
| (b.3) | 7.5 | 2 | 0.26 | 12.25 | 0.2 |
| (c.3) | 5 | 35 | 7 | 12.05 | 0.55 |
| (d.3) | 7.5 | 0.3 | 0.04 | 12.35 | 0.2 |
| (e.3) | 5 | 9 | 1.8 | 12.00 | 0.55 |

I.4 Manufacture of inventive precursor pCAM.4

The stirred tank reactor is charged with de-ionized water containing 0.2 mol/l ammonium sulfate and heated to 55°C under nitrogen atmosphere. Subsequently, solution (β.1) is added in a way that the pH value is set to 12.25.

At 55 °C, step (b.4) is commenced by adding solutions (α.2), (β.1) and (γ.1) in a way that the pH value of the mother liquor is 12.25, and the molar ratio of $NH_3$ to sum of Ni, Co and Mn is 0.20. The formation of a slurry is observed.

Mother liquor is separated from the slurried particles in a separate vessel attached to the top of the stirred tank reactor and then continuously withdrawn from the vessel by a pump, said vessel serving as the clarifier. The individual flow rates of the solutions, further referred to as $f_i$ with i referring to the number of the corresponding solution, were adjusted to meet a certain residence time $rt = V/(f_\alpha+f_\beta+f_\gamma)$ and a certain molar ratio in the reactor
$r(NH_3/Me) = c(NH_3)_{reactor}/[c(Ni)_{reactor} + c(Co)_{reactor} + c(Mn)_{reactor}]$ in the respective individual steps. Further details are summarized in Table 4.

In step (c.4), solutions (α.2), (β.1) and (γ.1) are added in a way that the pH value is 12.05, and the molar ratio of $NH_3$ to the sum of Ni, Co and Mn is 0.55.

In step (d.4), solutions (α.3), (β.1) and (γ.1) are added in a way that the pH value is 12.30, and the molar ratio

of $NH_3$ to TM (sum of Ni, Co and Mn) is 0.20 and the formation of a new fraction of small particles is observed by DLS.

In step (e.4), solutions (α.3), (β.1) and (γ.1) are added in a way that the pH value is 12.00, and the molar ratio of $NH_3$ to the sum of Ni, Co and Mn is 0.55.

After step (e.4), the solids are removed from the slurry by filtration, washed with water and dried under air at 120°C. Inventive precursor P-CAM.4 is obtained.

Table 4: Process parameters for the manufacture of P-CAM.4

| Step | Metal solution | rt [h] | run time [h] | factor of rt | pH* | r($NH_3$/Me) |
|---|---|---|---|---|---|---|
| (b.4) | (α.2) | 7.5 | 2 | 0.27 | 12.25 | 0.2 |
| (c.4) | (α.2): | 5 | 35 | 7 | 12.05 | 0.55 |
| (d.4) | (α.3): | 7.5 | 0.75 | 0.1 | 12.30 | 0.2 |
| (e.4) | (α.3): | 5 | 10 | 2 | 12.00 | 0.55 |

Table 5: Properties of the individual precursors

| | volume based PSD | | |
|---|---|---|---|
| precursor | $d_1$ [μm] | $d_2$ [μm] | $I_2/I_1$ |
| C-P-CAM.1 | - | 14.0 | - |
| P-CAM.2 | 4.1 | 14.2 | 74/26 |
| P-CAM.3 | 3.5 | 13.9 | 80/20 |
| P-CAM.4 | 4.2 | 13.9 | 72/28 |

The volume-based particle size distribution (PSD) is determined by dynamic light scattering (DLS) $d_1$ and $d_2$ are the diameter of the 1st and 2nd maximum and $I_1$ and $I_2$ are the relative intensity of the 1st and 2nd particle diameter maximum

The pressed density of the precursors P-CAM.2, P-CAM.3 and P-CAM.4 is higher than the pressed density of C-P-CAM.1, each determined at 250 MPa.

Table 6: Composition of P-CAM.2 (comparative) and P-CAM.3

| precursor | composition of smaller particles (4 μm) [mol-%] | Composition in core of bigger particles (14 μm) [mol-%] | composition at surface of bigger particles (14 μm) [mol-%] |
|---|---|---|---|
| P-CAM.2 | Ni: 87.0<br>Co: 5.0<br>Mn: 8.0 | Ni: 87.1<br>Co: 4.9<br>Mn: 8.0 | Ni: 87.0<br>Co: 5.0<br>Mn: 8.0 |
| P-CAM.3 | Ni: 77.0<br>Co: 9.0<br>Mn: 14.0 | Ni: 90.0<br>Co: 3.8<br>Mn: 6.2 | Ni: 77.0<br>Co: 9.0<br>Mn: 14.0 |

II. Manufacture of a comparative cathode active material and of the inventive cathode active materials

General protocol:

The respective precursor is mixed with $LiOH \cdot H_2O$, $Zr(OH)_4$ and $Al(OH)_3$ in molar ratios of Li:(Ni+Co+Mn) of 1.05:1, Al:(Ni+Co+Mn) of 0.02:1 and Zr:(Ni+Co+Mn) of 0.003:1. The resultant mixture is poured into a alumina crucible and heated to 760°C under oxygen atmosphere (10 exchanges/h) with a heating rate of 3 °C/min. The mixture is maintained at 760°C for six hours and then cooled to ambient temperature at a cooling rate of 10 °C / min and subsequently sieved using a mesh size of 30 μm.

From C-P-CAM.1, C-CAM.1 is obtained.

From P-CAM-2, comparative CAM.2 is obtained.

From P-CAM-3, inventive CAM.3 is obtained.

From P-CAM-4, inventive CAM.4 is obtained.

## Claims

1. Process for making a particulate (oxy)hydroxide of TM wherein TM comprises nickel and at least one of cobalt and manganese wherein said process comprises the steps of:

   (a) Providing an aqueous solution (α) or two differently composed solutions (α-b) and (α-d) each containing water-soluble salts of Ni and of at least one transition metal selected from Co and Mn, and, optionally, at least one further metal selected from Ti, Zr, Mo, W, Al, Mg, Nb, and Ta, and an aqueous solution (β) containing an alkali metal hydroxide and, optionally, an aqueous solution (γ) containing ammonia,
   (b) combining a solution (α) - or solution (α-b) - and a solution (β) and, if applicable, a solution (γ) at a pH value in the range of from 12.1 to 13.0, thereby creating solid particles of hydroxide containing nickel,
   (c) continuing combining solutions (α) - or (α-b) - and (β) and, if applicable, (γ) at a pH value in the range of from 9.0 to 12.1 and in any way below the pH value in step (b),
   (d) adding a solution (α) - or solution (α-d) - and a solution (β) and, if applicable, a solution (γ) at a pH value in the range of from 12.1 to 12.7 and in any way above the pH value in step (c),
   (e) continuing combining solutions (α) - or (α-d) - and (β) and, if applicable, (γ) at a pH value in the range of from 9.0 to 12.1 and in any way below the pH value in step (d),

   wherein step (d) has a duration in the range of from rt-0.01 to rt 0.15 and wherein rt is the average residence time of the reactor in which steps (b) to (e) are carried out.

2. Process according to claim 1 wherein steps (b) to (e) are performed in a continuous stirred tank reactor.

3. Process according to claim 1 or 2 wherein the particulate (oxy)hydroxide of TM is selected from hydroxides, oxyhydroxides and oxides of TM wherein TM is a combination of metals according to general formula (I)

   $$(Ni_aCo_bMn_c)_{1-d}M_d \qquad (I)$$

   with

   a being in the range of from 0.6 to 0.95,
   b being in the range of from 0.025 to 0.2,
   c being in the range of from zero to 0.2, and
   d being in the range of from zero to 0.1,
   M is selected from Mg, Al, Ti, Zr, Mo, W, Al, Nb, and Ta,

   $$a + b + c = 1.$$

4. Process according to any of the preceding claims wherein step (b) has a duration in the range of from rt 0.03 to rt 0.40 and wherein rt is the average residence time of the reactor system in which steps (b) to (e) are carried out.

5. Process according to any of the preceding claims wherein step (d) has a duration in the range of from rt 0.03 to rt·0.10 and wherein rt is the average residence time of the reactor system in which steps (b) to (e) are carried out.

6. Process according to any of the preceding claims wherein solutions (α-d) used in steps (d) and (e) have a different composition compared to the solutions (α-b) used in steps (b) and (c).

7. Process according to claim 6 wherein the nickel content of solutions (α-d) used in steps (d) and (e) is lower compared to the nickel content of solutions (α-b) used in steps (b) and (c).

8. Process according to any of the preceding claims wherein step (d) has a duration in the range of from 3 to 45 minutes.

**9.** Particulate (oxy)hydroxide of TM wherein TM is a combination of Ni and at least one transition metal selected from Co and Mn, and, optionally, at least one further metal selected from Ti, Zr, Mo, W, Al, Mg, Nb, and Ta, wherein said oxyhydroxide has a bimodal particle diameter distribution with a relative maximum at 2 to 6 μm and with a relative maximum at 8 to 16 μm, and wherein the particles of the smaller particle fraction have a relative nickel content that is lower compared to the relative nickel content of the bigger particle fraction, and wherein the particle diameter refers to the diameter of the secondary particles, and wherein the particles of the bigger particle fraction have a gradient in nickel concentration and wherein the relative nickel content at the outer surface of the secondary particles is lower than in the center.

**10.** Particulate (oxy)hydroxides according to claim 9 wherein the particles of the smaller particle fraction do not have a gradient in nickel concentration.

**11.** Use of particulate (oxy)hydroxides according to claim 9 or 10 for the manufacture of electrode active materials for lithium ion batteries.

**12.** Process for making an electrode active material wherein said process comprises the steps of mixing a particulate (oxy)hydroxide according claim 9 or 10 with a source of lithium and treating it at a temperature in the range of from 650 to 900°C.

**13.** Electrode active material according to general formula $Li_{1+x}TM_{1-x}O_2$ wherein x is in the range of from -0.03 to +0.1 and TM is a combination of Ni and at least one transition metal selected from Co and Mn, and, optionally, at least one further metal selected from Ti, Zr, Mo, W, Al, Mg, Nb, and Ta, wherein said electrode active material has a bimodal particle diameter distribution with a relative maximum at 2 to 6 μm and with a relative maximum at 8 to 16 μm, and wherein the particles of the smaller particle fraction have a relative nickel content that is lower compared to the relative nickel content of the bigger particle fraction, and wherein the particle diameter refers to the diameter of the secondary particles, and wherein the particles of the bigger particle fraction have a gradient in nickel concentration and wherein the relative nickel content at the outer surface of the secondary particles is lower than in the center.

**14.** Cathode comprising

(A) at least one cathode active material according to claim 13,
(B) carbon in electrically conductive form,
(C) at least one binder.

**Patentansprüche**

**1.** Verfahren zur Herstellung eines teilchenförmigen (Oxy)hydroxids von TM, wobei TM Nickel und mindestens eines von Cobalt und Mangan umfasst, wobei das Verfahren die folgenden Schritte umfasst:

(a) Bereitstellen einer wässrigen Lösung (α) oder von zwei unterschiedlich zusammengesetzten Lösungen (α-b) und (α-d), die jeweils wasserlösliche Salze von Ni und mindestens einem Übergangsmetall, das aus Co und Mn ausgewählt ist, enthalten, und gegebenenfalls mindestens eines weiteren Metalls, das aus Ti, Zr, Mo, W, Al, Mg, Nb und Ta ausgewählt ist, und einer wässrigen Lösung (β), die ein Alkalimetallhydroxid enthält, und gegebenenfalls einer wässrigen Lösung (γ), die Ammoniak enthält,
(b) Vereinigen einer Lösung (α) - oder Lösung (α-b) - und einer Lösung (β) und gegebenenfalls einer Lösung (γ) bei einem pH-Wert im Bereich von 12,1 bis 13,0, wodurch feste Teilchen von Nickel enthaltendem Hydroxid gebildet werden,
(c) Fortsetzen des Vereinigens der Lösungen (α) - oder (α-b) - und (β) und gegebenenfalls (γ) bei einem pH-Wert im Bereich von 9,0 bis 12,1 und in jedem Fall unterhalb des pH-Werts in Schritt (b),
(d) Zugeben einer Lösung (α) - oder Lösung (α-d) - und einer Lösung (β) und gegebenenfalls einer Lösung (γ) bei einem pH-Wert im Bereich von 12,1 bis 12,7 und in jedem Fall oberhalb des pH-Werts in Schritt (c),
(e) Fortsetzen des Vereinigens der Lösungen (α) - oder (α-d) - und (β) und gegebenenfalls (γ) bei einem pH-Wert im Bereich von 9,0 bis 12,1 und in jedem Fall unterhalb des pH-Werts in Schritt (d),

wobei Schritt (d) eine Dauer im Bereich von Vz·0,01 bis Vz·0,15 aufweist und wobei Vz die durchschnittliche Verweilzeit des Reaktors ist, in dem die Schritte (b) bis (e) durchgeführt werden.

**2.** Verfahren nach Anspruch 1, wobei die Schritte (b) bis (e) in einem kontinuierlichen Rührkesselreaktor durchgeführt werden.

**3.** Verfahren nach Anspruch 1 oder 2, wobei das teilchenförmige (Oxy)hydroxid von TM aus Hydroxiden, Oxyhydroxiden und Oxiden von TM ausgewählt ist, wobei TM eine Kombination von Metallen gemäß der allgemeinen Formel (I) ist,

$$(Ni_aCo_bMn_c)_{1-d}M_d \quad (I),$$

wobei

a im Bereich von 0,6 bis 0,95 liegt,
b im Bereich von 0,025 bis 0,2 liegt,
c im Bereich von null bis 0,2 liegt und
d im Bereich von null bis 0,1 liegt,
M aus Mg, Al, Ti, Zr, Mo, W, Al, Nb und Ta ausgewählt ist,

$$a + b + c = 1.$$

**4.** Verfahren nach einem der vorhergehenden Ansprüche, wobei Schritt (b) eine Dauer im Bereich von Vz·0,03 bis Vz·0,40 hat und wobei Vz die durchschnittliche Verweilzeit des Reaktorsystems ist, in dem die Schritte (b) bis (e) durchgeführt werden.

**5.** Verfahren nach einem der vorhergehenden Ansprüche, wobei Schritt (d) eine Dauer im Bereich von Vz·0,03 bis Vz·0,10 hat und wobei Vz die durchschnittliche Verweilzeit des Reaktorsystems ist, in dem die Schritte (b) bis (e) durchgeführt werden.

**6.** Verfahren nach einem der vorhergehenden Ansprüche, wobei die in den Schritten (d) und (e) verwendeten Lösungen ($\alpha$-d) eine andere Zusammensetzung haben als die in den Schritten (b) und (c) verwendeten Lösungen ($\alpha$-b).

**7.** Verfahren nach Anspruch 6, wobei der Nickelgehalt der in den Schritten (d) und (e) verwendeten Lösungen ($\alpha$-d) kleiner ist als der Nickelgehalt der in den Schritten (b) und (c) verwendeten Lösungen ($\alpha$-b).

**8.** Verfahren nach einem der vorstehenden Ansprüche, wobei Schritt (d) eine Dauer im Bereich von 3 bis 45 Minuten aufweist.

**9.** Teilchenförmiges (Oxy)hydroxid von TM, wobei TM eine Kombination von Ni und mindestens einem Übergangsmetall, das aus Co und Mn ausgewählt ist, und gegebenenfalls mindestens einem weiteren Metall, das aus Ti, Zr, Mo, W, Al, Mg, Nb und Ta ausgewählt ist, ist, wobei das Oxyhydroxid eine bimodale Teilchendurchmesserverteilung mit einem relativen Maximum bei 2 bis 6 $\mu$m und mit einem relativen Maximum bei 8 bis 16 $\mu$m aufweist und wobei die Teilchen der Fraktion kleinerer Teilchen einen relativen Nickelgehalt aufweisen, der kleiner ist als der relative Nickelgehalt der Fraktion größerer Teilchen, und wobei sich der Teilchendurchmesser auf den Durchmesser der Sekundärteilchen bezieht und wobei die Teilchen der Fraktion größerer Teilchen einen Nickelkonzentrationsgradienten aufweisen und wobei der relative Nickelgehalt an der äußeren Oberfläche der Sekundärteilchen kleiner ist als in der Mitte.

**10.** Teilchenförmige (Oxy)hydroxide nach Anspruch 9, wobei die Teilchen der Fraktion kleinerer Teilchen keinen Nickelkonzentrationsgradienten aufweisen.

**11.** Verwendung von teilchenförmigen (Oxy)hydroxiden nach Anspruch 9 oder 10 zur Herstellung von Elektrodenaktivmaterialien für Lithiumionenbatterien.

**12.** Verfahren zur Herstellung eines Elektrodenaktivmaterials, bei dem man ein teilchenförmiges (Oxy)hydroxid nach Anspruch 9 oder 10 mit einer Lithiumquelle mischt und es bei einer Temperatur im Bereich von 650 bis 900 °C behandelt.

**13.** Elektrodenaktivmaterial gemäß der allgemeinen Formel $Li_{1+x}TM_{1-x}O_2$, wobei x im Bereich von -0,03 bis +0,1 liegt

und TM eine Kombination von Ni und mindestens einem Übergangsmetall, das aus Co und Mn ausgewählt ist, und gegebenenfalls mindestens einem weiteren Metall, das aus Ti, Zr, Mo, W, Al, Mg, Nb und Ta ausgewählt ist, ist, wobei das Elektrodenaktivmaterial eine bimodale Teilchendurchmesserverteilung mit einem relativen Maximum bei 2 bis 6 μm und mit einem relativen Maximum bei 8 bis 16 μm aufweist und wobei die Teilchen der Fraktion kleinerer Teilchen einen relativen Nickelgehalt aufweisen, der kleiner ist als der relative Nickelgehalt der Fraktion größerer Teilchen, und wobei sich der Teilchendurchmesser auf den Durchmesser der Sekundärteilchen bezieht und wobei die Teilchen der Fraktion größerer Teilchen einen Nickelkonzentrationsgradienten aufweisen und wobei der relative Nickelgehalt an der äußeren Oberfläche der Sekundärteilchen kleiner ist als in der Mitte.

**14.** Kathode, umfassend

(A) mindestens ein Kathodenaktivmaterial nach Anspruch 13,
(B) Kohlenstoff in elektrisch leitfähiger Form,
(C) mindestens ein Bindemittel.

## Revendications

**1.** Procédé de fabrication d'(oxy)hydroxyde particulaire de TM, dans lequel TM comprend du nickel et au moins l'un parmi le cobalt et le manganèse, dans lequel ledit procédé comprend les étapes de :

(a) fourniture d'une solution aqueuse (α) ou de deux solutions composées différemment (α-b) et (α-d) contenant chacune des sels solubles dans l'eau de Ni et d'au moins un métal de transition sélectionné parmi Co et Mn, et, éventuellement, d'au moins un autre métal sélectionné parmi Ti, Zr, Mo, W, Al, Mg, Nb et Ta, et une solution aqueuse (β) contenant un hydroxyde de métal alcalin et, éventuellement, une solution aqueuse (γ) contenant de l'ammoniaque,
(b) combinaison d'une solution (α) - ou d'une solution (α-b) - et d'une solution (β) et, le cas échéant, d'une solution (γ) à une valeur de pH dans la plage de 12,1 à 13,0, créant ainsi des particules solides d'hydroxyde contenant du nickel,
(c) poursuite de la combinaison des solutions (α) - ou (α-b) - et (β) et, le cas échéant, (γ) à une valeur de pH dans la plage de 9,0 à 12,1 et inférieure de quelque manière que ce soit à la valeur de pH dans l'étape (b),
(d) ajout d'une solution (α) - ou d'une solution (α-d) - et d'une solution (β) et, le cas échéant, d'une solution (γ) à une valeur de pH dans la plage de 12,1 à 12,7 et supérieure de quelque manière que ce soit à la valeur de pH dans l'étape (c),
(e) poursuite de la combinaison des solutions (α) - ou (α-d) - et (β) et, le cas échéant, (γ) à une valeur de pH dans la plage de 9,0 à 12,1 et inférieure de quelque manière que ce soit à la valeur de pH dans l'étape (d),

dans lequel l'étape (d) a une durée dans la plage de rt·0,01 à rt·0,15 et dans lequel rt est le temps de séjour moyen du réacteur dans lequel les étapes (b) à (e) sont exécutées.

**2.** Procédé selon la revendication 1, dans lequel les étapes (b) à (e) sont effectuées dans un réacteur à cuve agitée en continu.

**3.** Procédé selon la revendication 1 ou 2, dans lequel l'(oxy) hydroxyde particulaire de TM est sélectionné parmi des hydroxydes, des oxyhydroxydes et des oxydes de TM, TM étant une combinaison de métaux selon la formule générale (I)

$$(Ni_aCo_bMn_c)_{1-d}M_d \quad (I)$$

a étant dans la plage allant de 0,6 à 0,95,
b étant dans la plage allant de 0,025 à 0,2,
c étant dans la plage allant de zéro à 0,2, et
d étant dans la plage de zéro à 0,1,
M étant sélectionné parmi Mg, Al, Ti, Zr, Mo, W, Al, Nb et Ta,

$$a + b + c = 1.$$

4. Procédé selon l'une quelconque des revendications précédentes dans lequel l'étape (b) a une durée dans la plage de rt·0,03 à rt·0,40 et dans lequel rt est le temps de séjour moyen du système de réacteur dans lequel les étapes (b) à (e) sont exécutées.

5. Procédé selon l'une quelconque des revendications précédentes dans lequel l'étape (d) a une durée dans la plage de rt·0,03 à rt·0,10 et dans laquelle rt est le temps de séjour moyen du système de réacteur dans lequel les étapes (b) à (e) sont exécutées.

6. Procédé selon l'une quelconque des revendications précédentes dans lequel les solutions ($\alpha$-d) utilisées dans les étapes (d) et (e) ont une composition différente de celle des solutions ($\alpha$-b) utilisées dans les étapes (b) et (c).

7. Procédé selon la revendication 6 dans lequel la teneur en nickel des solutions ($\alpha$-d) utilisées aux étapes (d) et (e) est inférieure à la teneur en nickel des solutions ($\alpha$-b) utilisées aux étapes (b) et (c).

8. Procédé selon l'une quelconque des revendications précédentes, l'étape (d) ayant une durée dans la plage allant de 3 à 45 minutes.

9. (Oxy)hydroxyde particulaire de TM dans lequel TM est une combinaison de Ni et d'au moins un métal de transition sélectionné parmi Co et Mn, et, éventuellement, d'au moins un autre métal sélectionné parmi Ti, Zr, Mo, W, Al, Mg, Nb et Ta, dans lequel ledit oxyhydroxyde a une distribution de diamètre de particules bimodale avec un maximum relatif à 2 à 6 $\mu$m et un maximum relatif à 8 à 16 $\mu$m, et dans lequel les particules de la fraction de particule la plus petite ont une teneur relative en nickel inférieure à la teneur relative en nickel de la fraction de particule la plus grande, et dans laquelle le diamètre de particules fait référence au diamètre des particules secondaires, et dans lequel les particules de la fraction de particules la plus grande ont un gradient de concentration en nickel et dans lequel la teneur relative en nickel à la surface extérieure des particules secondaires est inférieure à celle dans le centre.

10. (Oxy)hydroxydes particulaires selon la revendication 9, dans lequel les particules de la fraction de particules la plus petite n'ont pas de gradient de concentration en nickel.

11. Utilisation d'(oxy)hydroxydes particulaires selon la revendication 9 ou 10 pour la fabrication de matériaux actifs d'électrode pour batteries lithium ion.

12. Procédé pour la préparation d'un matériau actif d'électrode dans lequel ledit procédé comprend les étapes de mélange d'un (oxy)hydroxyde particulaire selon la revendication 9 ou 10 avec une source de lithium et de traitement de celui-ci à une température dans la plage de 650 à 900 °C.

13. Matériau actif d'électrode selon la formule générale $Li_{1+x}TM_{1-x}O_2$ dans laquelle x se situe dans la plage de -0,03 à +0,1 et TM est une combinaison de Ni et d'au moins un métal de transition sélectionné parmi Co et Mn, et, éventuellement, d'au moins un autre métal sélectionné parmi Ti, Zr, Mo, W, Al, Mg, Nb et Ta, dans lequel ledit matériau actif d'électrode a une distribution de diamètre de particules bimodale avec un maximum relatif à 2 à 6 $\mu$m et un maximum relatif à 8 à 16 $\mu$m, et dans lequel les particules de la fraction de particule la plus petite ont une teneur relative en nickel inférieure à la teneur relative en nickel de la fraction de particule la plus grande, et dans laquelle le diamètre de particules fait référence au diamètre des particules secondaires, et dans lequel les particules de la fraction de particules la plus grande ont un gradient de concentration en nickel et dans lequel la teneur relative en nickel à la surface extérieure des particules secondaires est inférieure à celle dans le centre.

14. Cathode comprenant

(A) au moins un matériau actif de cathode selon la revendication 13,
(B) du carbone sous forme électriquement conductrice,
(C) au moins un liant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20110240913 A
- KR 101815779 B1